# EUROPEAN PATENT SPECIFICATION

(11) **EP 3 352 392 B1**
(45) Date of publication and mention of the grant of the patent: **15.04.2020**
(21) Application number: 16845660.6
(22) Date of filing: 05.09.2016
(51) Int. Cl.: H04J 3/06

(54) **TIME SYNCHRONIZATION PACKET PROCESSING METHOD AND DEVICE**
VERARBEITUNGSVERFAHREN UND -VORRICHTUNG FÜR ZEITSYNCHRONISATIONSPAKETE
PROCÉDÉ ET DISPOSITIF DE TRAITEMENT DE PAQUETS DE SYNCHRONISATION TEMPORELLE

(30) Priority: 16.09.2015 CN 201510590170
(43) Date of publication of application: 25.07.2018
(73) Proprietor: China Mobile Communications Group Co., Ltd, Beijing 100032 (CN)
(72) Inventor: HAN, Liuyan, Beijing 100032 (CN); LI, Han, Beijing 100032 (CN)
(74) Representative: Gevers Patents
(86) International application number: PCT/CN2016/098076
(87) International publication number: WO 2017/045546

(56) References cited:
- EP-A1- 2 802 097
- EP-A1- 2 852 087
- CN-A- 102 215 101
- CN-A- 103 856 360
- US-A1- 2011 200 051
- US-A1- 2014 281 037
- US-B1- 6 185 247

## Description

### CROSS-REFERENCE TO RELATED APPLICATIONS

The present application claims benefit of Chinese Patent Application No. 201510590170.4, filed on September 16, 2015.

### TECHNICAL FIELD

The disclosure relates to the field of transmission and time synchronization technologies, and in particular, to a time synchronization packet processing method and apparatus.

### BACKGROUND

With the development of network technologies, requirements of time synchronization in many fields become increasingly higher. For example, in the mobile communications field, multiple communication modes can work normally only when air interfaces between base stations meet time synchronization requirements. Common communication modes include: the Time Division-Synchronous Code Division Multiple Access (TD-SCDMA) mode, the Time Division Long Term Evolution (TD-LTE) mode, the Code Division Multiple Access 2000 (CDMA2000, 3G mobile communication standard) mode, the Long Term Evolution-Advanced (LTE-A) mode, Multimedia Broadcast Multicast Service (MBMS), and the like.

At present, a mainstream time synchronization protocol is the Precision Time Synchronization Protocol (PTP). The PTP is a master-slave synchronization system, which encodes time information in a master-slave clock manner, and realizes master-slave time synchronization by using the network symmetry and a delay measurement technique. In a PTP synchronization path, a master clock provides a source time to a downstream clock for time synchronization, that is, for a slave clock's reference. The slave clock calibrates a local time according to a time provided by the master clock by exchanging messages with the master clock.

The PTP system consists of a number of nodes, including one or more grandmaster clock nodes (Grandmaster nodes) and one or more boundary clock nodes, which provide a downstream clock node with a time source. A boundary clock node is used as an example. It has both a master clock and a slave clock. After receiving, via a master clock port, a PTP packet transferred by an upstream, the boundary clock node processes the PTP packet and determines a best time source by using a best master clock (BMC) algorithm. A system clock tracks the best time source to synchronize with the master clock, and regenerates an output PTP packet at the same time, and sends the output PTP packet to a downstream clock node via a slave clock port.

In the prior art, the time synchronization packet processing is processed immediately inside a device. If a time synchronization status of a clock node or a status of an input source changes, the output time synchronization packet will change accordingly. This processing mode may cause network instability in some cases. For example, when an input time source of a clock node is switched, in a process of searching for a switched time source, the clock node may enter into a time holdover state for a short time. As a result, one or more output time synchronization packet parameters change, and are rapidly delivered to one or more downstream clocks, causing a time source switching event of the downstream clock node. However, the time holdover state is an instantaneous state. When finding a new time source, the one or more clock node change their output time synchronization packet parameters. After receiving the one or more parameters, the downstream clock node may switch the time source again. Consequently, the network nodes frequently and rapidly switch time sources, resulting in network instability, and even causing that some time nodes cannot lock times due to frequent changes in states and the performance deteriorates dramatically.

EP 2802097 A1 discloses a clock synchronizaiton method.

EP 2852087 A1 discloses a method for synchronizing a packet metwork.

US 2014/0281037 A1 discloses a fault tolerant clock network.

### SUMMARY

### I. The technical problem to be solved

The disclosure provides a time synchronization packet processing method and apparatus, resolving the technical problem in the prior art that a change of an input time synchronization packet of a time synchronization node immediately causes a change of an output time synchronization packet parameter, resulting in unstable operation of a time synchronization network.

### II. Technical solution

According to an aspect of the disclosure, a time synchronization packet processing method is provided, according to appended claim 1.

According to another aspect of the disclosure, a time synchronization packet processing apparatus is provided, according to appended claim 7.

### III. Beneficial effects

At least one of the above technical solutions of the embodiments of the disclosure has the following beneficial effects:
Change conditions of time source information input by the time synchronization node are distinguished for processing, and a certain time delay is set to change a time synchronization packet parameter output to a downstream clock node when a change condition of the time source information changes a time source tracked by the time synchronization node, so as to avoid an unnecessary downstream fluctuation and ensure the stable operation of a time synchronization network.

### BRIEF DESCRIPTION OF DRAWINGS

To describe the technical solutions in the embodiments of the disclosure or in the prior art more clearly, the following briefly introduces the accompanying drawings required for describing the embodiments. Apparently, the accompanying drawings in the following description show merely some embodiments of the disclosure, and a person of ordinary skill in the art may still derive other drawings from these accompanying drawings without creative efforts.
FIG. 1 is a schematic flowchart of Embodiment 1 according to the disclosure;
FIG. 2 is a schematic flowchart of Embodiment 3 according to the disclosure;
FIG. 3 is a schematic flowchart of Embodiment 4 according to the disclosure; and
FIG. 4 is a schematic diagram of a functional module of Embodiment 8 according to the disclosure.

### DETAILED DESCRIPTION

The specific implementation manners of the disclosure are further described below with reference to the accompanying drawings and embodiments. The following embodiments are for illustrative purposes only and do not limit the scope of the disclosure.

To make the objectives, technical solutions, and advantages of the embodiments of the disclosure clearer, the following clearly and completely describes the technical solutions in the embodiments of the disclosure with reference to the accompanying drawings in the embodiments of the disclosure. Apparently, the described embodiments of the disclosure are some but not all of the embodiments of the disclosure. All other embodiments obtained by a person of ordinary skill in the art based on the described embodiments of the disclosure shall fall within the protection scope of the disclosure.

Unless otherwise defined, the technical and scientific terms used herein are as they are usually understood by those skilled in the art to which the disclosure pertains. "First", "second" and similar words used in the specification and claims of the disclosure do not denote any order, quantity or importance, but are merely intended to distinguish between different constituents. Similarly, the terms "one", "a" and the like are not meant to be limiting, but rather denote the presence of at least one. The words "connected", "connection", or the like is not limited to a physical or mechanical connection but may include an electrical connection, whether direct or indirect. The words "upper", "lower", "left", "right", and the like are used only to indicate a relative positional relationship, and when the absolute position of the described object changes, the relative positional relationship also changes accordingly.

The embodiments of the disclosure will be explained in detail with reference to the accompanying drawings. It should be understood that the embodiments described herein are merely used to explain and interpret the disclosure, rather than to limit the disclosure.

Exemplary embodiments of the disclosure will be described below in more detail with reference to the accompanying drawings. Although the accompanying drawings show exemplary embodiments of the disclosure, it should be understood that the disclosure may be implemented in various forms and should not be limited to the embodiments set forth herein. On the contrary, these embodiments are provided so that the disclosure will be more fully understandable, and will fully convey the scope of the disclosure to those skilled in the art.

### Embodiment 1

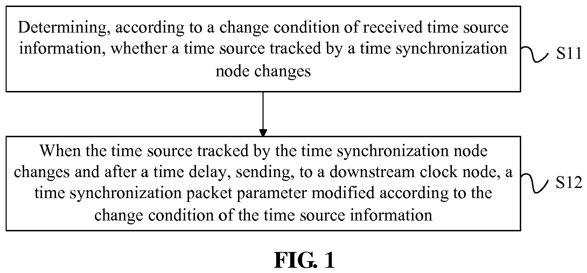

As shown in FIG. 1, an embodiment of the disclosure provides a time synchronization packet processing method applied to a time synchronization node. The method includes step S11 and step S12.

In step S11, whether a time source tracked by the time synchronization node changes is determined according to a change condition of received time source information.

The time synchronization node mentioned herein may be a boundary clock node, or may be a grandmaster clock node. A boundary clock node is used as an example. The boundary clock node may be used as a slave clock node of an upstream clock node to receive a time synchronization packet sent by an upstream clock node, and may also be used as a master clock node of a downstream clock node to send a time synchronization packet parameter to a downstream clock node. In this way, it can be realized that an upstream clock node, a boundary clock node, and a downstream clock node maintain consistent parameters such as frequency and phase. A grandmaster clock node directly receives time source information of a satellite receiver sent by a satellite and uses the time source information as its own reference time.

In the time synchronization process, when the time source information sent by the satellite and received by a grandmaster clock changes or the time synchronization packet transmitted by the upstream clock node and received by the boundary clock node changes, a time synchronization packet parameter transmitted to the downstream clock node may be caused to be modified. At this time, it needs to determine whether the change of the received time source information may lead to a change of a time source tracked by the time synchronization node, that is, whether the time synchronization node needs to switch the time source.

In step S12, when the time source tracked by the time synchronization node changes and after a time delay, a time synchronization packet parameter modified according to the change condition of the time source information is sent to a downstream clock node.

When it is determined that the change condition of the time source information leads to that the time synchronization node switches its own time source, a time synchronization packet parameter output to the downstream clock node is modified. As a result, the downstream clock node follows the time synchronization node to switch a time source, causing a fluctuation of the downstream clock node. To avoid unstable operation of the network caused by the fluctuation of the downstream clock node, it is required to send a modified time synchronization packet parameter to the downstream clock node after a time delay. That is, when the time synchronization node needs to switch the time source, the time synchronization packet parameter output to the downstream clock node is not modified within the predetermined time.

The predetermined time mentioned herein refers to a time that the synchronous node restores to a normal operation state and the normal operation of the downstream clock node is not affected.

In Embodiment 1 of the disclosure, the grandmaster clock node determines whether to switch a tracked time source according to a change condition of a receiver time source received from a satellite, or the boundary clock node determines whether to switch a tracked time source according to a change condition of a time synchronization packet received from an upstream clock node. When the time source is required to be switched, a modified time synchronization packet parameter is sent to the downstream clock node after the time delay, so as to avoid unnecessary switching process of the downstream clock node, thereby avoiding an unnecessary network fluctuation and ensuring a stable operation of the entire time synchronization network.

### Embodiment 2

Embodiment 2 is based on Embodiment 1, and a change condition of the time source information includes multiple cases. The grandmaster clock node is used as an example. The change condition of the time source information includes: a parameter variation of a receive satellite, a parameter variation of a satellite receiver, and the like. In addition, the boundary clock node is used as an example. The received time source information sent by the upstream clock node is a time synchronization packet (such as an accurate time synchronization PTP protocol packet). The change condition of the time synchronization packet includes: a packet loss, a partial packet loss, poor packet quality, packet delay, a packet parameter variation, and the like. A packet parameter includes one or more of the following parameters: a clock class (clockClass), grandmaster identity information (grandmasterIdentity), a step move amount (stepsRemoved), time traceability (timeTraceable), frequency traceability (frequencyTraceable) or the like. Embodiment 2 is described by using the following scenario as an example.

When the change condition of the time source information is that the time source information cannot be normally received, or the change condition of the time source information leads to that the time synchronization node changes a time source according to the received time source information, it is determined that a time synchronization packet parameter transmitted to the downstream clock node is required to be modified under the change condition.

It should be pointed out that other conditions that may enable the time synchronization node to change the time source also belong to the case of sending a modified time synchronization packet parameter to the downstream clock node after the time delay mentioned in above Embodiment 1.

### Embodiment 3

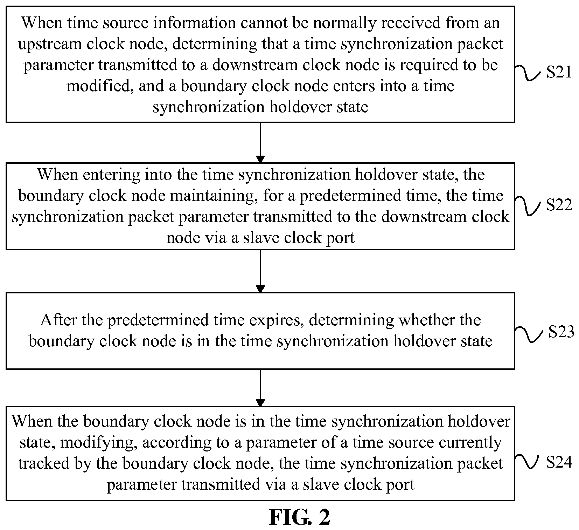

Embodiment 3 specifically describes the time synchronization packet processing method in combination with the case in which the change condition of the time source information is that the time source information cannot be normally received in Embodiment 2. As shown in FIG. 2, a boundary clock node is used as an example. The time synchronization packet processing method specifically includes step S21 to step S24.

In step S21, when time source information cannot be normally received from an upstream clock node, it is determined that a time synchronization packet parameter transmitted to a downstream clock node is required to be modified, and the boundary clock node enters into a time synchronization holdover state.

That time source information cannot be normally received mentioned herein refers to that the boundary clock node cannot normally receive a time synchronization packet. A specific situation includes: the time synchronization packet is partially lost, the time synchronization packet sent by the upstream clock node is not received within a preset time, the upstream clock node stops sending the time synchronization packet, the upstream clock node fails to send the time synchronization packet, or the like. The boundary clock node determines that a time synchronization packet parameter transmitted to the downstream clock node is required to be modified. At this time, the boundary clock node enters into the time synchronization holdover state. The time synchronization holdover state mentioned herein refers to that the boundary clock node updates its local time by using its own clock instead of using an external time source as a reference clock for updating the local time.

In step S22, when entering into the time synchronization holdover state, the boundary clock node maintains, for a predetermined time, the time synchronization packet parameter transmitted to the downstream clock node via a slave clock port.

The predetermined time mentioned herein refers to an experienced time that the received time synchronization packet sent by the upstream clock node is restored and the normal operation of a synchronization network of the downstream clock node is not affected. Preferably, the predetermined time t1 may be set to one or more periods in which the upstream clock node sends the time synchronization packet. That is, after entering into the time synchronization holdover state, the boundary clock node maintains the time synchronization packet parameter transmitted via a clock port unchanged before the upstream clock node sends the time synchronization packet next time or next Nth time.

In step S23, after the predetermined time expires, it is determined whether the boundary clock node is in the time synchronization holdover state.

After maintaining the time synchronization holdover state for the predetermined time, the boundary clock node needs to detect whether itself is still in the time synchronization holdover state.

In step S24, when the boundary clock node is in the time synchronization holdover state, according to a parameter of a time source currently tracked by the boundary clock node, the time synchronization packet parameter transmitted via a slave clock port is modified.

When a time that the boundary clock node maintains the time synchronization packet parameter transmitted via a clock port unchanged exceeds the predetermined time, and when the boundary clock node is still in the time synchronization holdover state, to make the normal operation of the entire time synchronization network not affected, the boundary clock node needs to modify, according to a parameter of a time source currently tracked by the boundary clock node, the time synchronization packet parameter transmitted to the downstream clock node, so that the downstream clock node switches to a correct time source, so as to ensure clock synchronization of the entire network.

### Embodiment 4

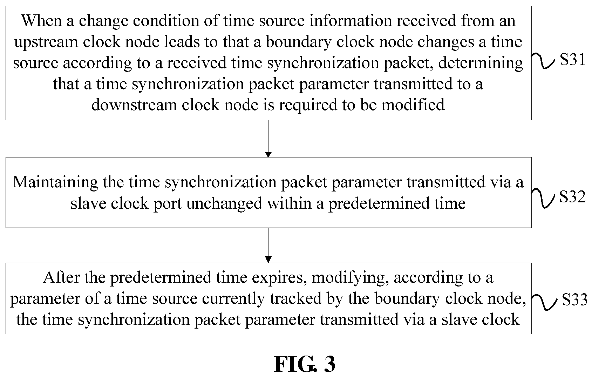

Embodiment 4 specifically describes the time synchronization packet processing method in combination with the case in which the change condition of the time source information leads to that the time synchronization node changes a time source according to the received time source information in Embodiment 2. A boundary clock node is used as an example. As shown in FIG. 3, the method specifically includes step S31 to step S33.

In step S31, when the change condition of the time source information received from an upstream clock node leads to that the boundary clock node changes a time source according to a received time synchronization packet, a time synchronization packet parameter transmitted to a downstream clock node is required to be modified.

The time synchronization packet received by the boundary clock node from the upstream clock node mentioned herein refers to a time synchronization packet parameter received by the boundary clock node from a currently selected time source. When the packet parameter changes, the boundary clock node determines that, when it is determined by using a BMC source selection algorithm that the boundary clock node needs to change the time source according to the received time synchronization packet, the time synchronization packet parameter transmitted to a downstream clock node is required to be modified.

In step S32, the time synchronization packet parameter transmitted via a slave clock port is maintained unchanged within the predetermined time.

The predetermined time mentioned herein refers to an experienced time that the boundary clock node tracks to a new time source and the normal operation of a synchronization network of the downstream clock node is not affected. Preferably, the predetermined time t2 may be set to a time required by the boundary clock node for calculating and tracking the new time source, that is, the boundary clock node always maintains the time synchronization packet parameter transmitted via a clock port unchanged before the boundary clock node tracks to the new time source.

In step S33, after the predetermined time expires, the time synchronization packet parameter transmitted via a slave clock is modified according to a parameter of a time source currently tracked by the boundary clock node.

After tracking to the new time source, the boundary clock node needs to modify, according to the parameter of the currently-tracked time source, the time synchronization packet parameter transmitted to the downstream clock node, so that the downstream clock node switches to a correct time source, so as to ensure clock synchronization of the entire network.

### Embodiment 5

The foregoing Embodiments 1 to 4 describe the case in which a certain time delay is set to change a time synchronization packet parameter output to a downstream clock node when a synchronization state of the time synchronization node changes. Embodiment 5 will describe a case in which the change condition of the time source information does not lead to that the time synchronization node switches a time source.
when the change condition of the time source information does not lead to that the time synchronization node changes a time source, according to the change condition of the time source information, the time synchronization packet parameter transmitted to the downstream clock node is directly modified.

A boundary clock node is used as an example. When the time synchronization packet received by the boundary clock node from the upstream clock node changes, the boundary clock node determines, by using a BMC source selection algorithm and according to the received time synchronization packet, that the boundary clock node does not need to change the time source. At this time, the boundary clock node does not set a delay time for modifying the output time synchronization packet parameter, but directly modifies a clock packet parameter transmitted to the downstream clock node.

### Embodiment 6

According to the time delay described in Embodiments 1 to 5, when change conditions of the time source information are different, corresponding time delays are different. For example, t1 mentioned in Embodiment 3 and t2 mentioned in Embodiment 4 may be set to different times.

### Embodiment 7

It should be pointed out that the cases described in the foregoing embodiments are all cases processed when the time source information changes. Embodiment 7 will describe a case processed when a time synchronization protocol or interface changes.

When the boundary clock node has multiple time synchronization interfaces and protocols, for example, a PTN system has two time synchronization protocol interfaces: PTP and 1PPS + TOD, and then when one of the protocols as a time source changes, an output time synchronization packet parameter of another interface is changed accordingly. For example, if the boundary clock node tracks the PTP time source and the output interface is 1PPS + TOD, a device enters into a time synchronization holdover state if a PTP packet is lost. At this time, the boundary clock node needs to set a delay time t3. After t3, if the device is still in the time synchronization holdover state, a status parameter of an output 1PPS + TOD packet changes.

### Embodiment 8

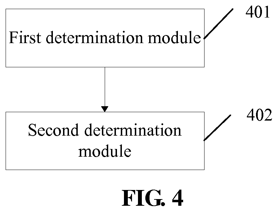

The foregoing seven embodiments respectively introduce that different processing strategies are used according to different change conditions of time source information input by the time synchronization node. When the time synchronization state changes, the time synchronization node sets a certain delay time to change a time synchronization packet parameter output to a downstream clock node, so as to avoid an unnecessary downstream fluctuation and ensure the stable operation of a time synchronization network. Embodiment 8 will described a time synchronization packet processing apparatus corresponding to the above the time synchronization packet processing method in detail with reference to FIG. 4.

Specifically, the time synchronization packet processing apparatus is applied to a time synchronization node and includes:
a first determination module 401 arranged to determine, according to a change condition of received time source information, whether a time source tracked by the time synchronization node changes; and
a first processing module 402 arranged to, when the time source tracked by the time synchronization node changes and after a time delay, send, to a downstream clock node, a time synchronization packet parameter modified according to the change condition of the time source information.

In addition, in a possible embodiment, the first determination module includes:
a first determination unit arranged to, when the change condition of the time source information is that the time source information cannot be normally received, determine that a time synchronization packet parameter transmitted to the downstream clock node is required to be modified; or
a second determination unit arranged to, when the change condition of the time source information leads to that the time synchronization node changes a time source according to the received time source information, determine that a time synchronization packet parameter transmitted to the downstream clock node is required to be modified.

In addition, in a possible embodiment, the processing apparatus further includes:
a second determination module arranged to, when the change condition of the time source information is that the time source information cannot be normally received, determine after the predetermined time expires whether the time synchronization node is in a time synchronization holdover state; and
a second processing module arranged to, when the time synchronization node is in the time synchronization holdover state, modify, according to a parameter of a time source currently tracked by the time synchronization node, the time synchronization packet parameter transmitted to the downstream clock node.

In addition, in a possible embodiment, the processing apparatus further includes:
a third processing module arranged to, when the change condition of the time source information leads to that the time synchronization node changes a time source according to the received time source information, modify after the predetermined time expires, a time synchronization packet parameter transmitted via a slave clock according to a parameter of a time source currently tracked by the time synchronization node.

In addition, in a possible embodiment, the time synchronization packet processing apparatus further includes:
a fourth processing module arranged to, when the change condition of the time source information does not lead to that the time synchronization node changes a time source, directly modify, according to the change condition of the time source information, the time synchronization packet parameter transmitted to the downstream clock node.

It should be noted that the apparatus is corresponding to the above time synchronization packet processing method, and all the implementation manners in the method embodiments are applicable to embodiments of the apparatus, and the same technical effect can be achieved.

The foregoing descriptions are preferred implementation manners of the disclosure. It should be noted that for a person of ordinary skill in the art, several improvements and modifications may further be made without departing from the principle of the disclosure. These improvements and modifications should also be deemed as falling within the protection scope of the disclosure.

## Claims

1. A time synchronization packet processing method, applied to a time synchronization node, the method comprising:
determining (S11), according to a change condition of received time source information, whether a time source tracked by the time synchronization node changes, wherein the time source information comprises: at least one of a parameter of a receive satellite or a parameter of a satellite receiver; or, a time synchronization packet; and
when the time source tracked by the time synchronization node changes and after a predetermined time delay, sending (S12), to a downstream clock node, a time synchronization packet parameter modified according to the change condition of the time source information, wherein within the predetermined time, the time synchronization node maintaines a time synchronization packet parameter transmitted to the downstream clock node unchanged.

2. The time synchronization packet processing method according to claim 1, wherein when the change condition of the time source information is that the time source information cannot be normally received, or when the change condition of the time source information leads to that the time synchronization node changes a time source according to the received time source information, a time synchronization packet parameter transmitted to the downstream clock node is required to be modified.

3. The time synchronization packet processing method according to claim 2, wherein when the change condition of the time source information is that the time source information cannot be normally received, the processing method further comprises:
after the predetermined time expires, determining (S23) whether the time synchronization node is in a time synchronization holdover state; and
when the time synchronization node is in the time synchronization holdover state, modifying (S24), according to a parameter of a time source currently tracked by the time synchronization node, the time synchronization packet parameter transmitted to the downstream clock node.

4. The time synchronization packet processing method according to claim 2, wherein when the change condition of the time source information leads to that the time synchronization node changes a time source according to the received time source information, the processing method further comprises:
after the predetermined time expires, modifying (S33), according to a parameter of a time source currently tracked by the time synchronization node, a time synchronization packet parameter transmitted via a slave clock.

5. The time synchronization packet processing method according to any one of claims 1 to 4, further comprising:
when no time source switching is needed for the time synchronization node based on the change condition of the time source information, modifying, according to the change condition of the time source information, the time synchronization packet parameter transmitted to the downstream clock node.

6. The time synchronization packet processing method according to any one of claims 1 to 5, wherein when change conditions of the received time source information are different, corresponding predetermined time delays are different.

7. A time synchronization packet processing apparatus, applied to a time synchronization node, the apparatus comprising:
a first determination module (401) arranged to determine, according to a change condition of received time source information, whether a time source tracked by the time synchronization node changes, wherein the time source information comprises: at least one of a parameter of a receive satellite or a parameter of a satellite receiver; or, a time synchronization packet; and
a first processing module (402) arranged to, when the time source tracked by the time synchronization node changes and after a predetermined time delay, send, to a downstream clock node, a time synchronization packet parameter modified according to the change condition of the time source information,
wherein within the predetermined time, the time synchronization node is arranged to maintain a time synchonization packet parameter transmitted to the downstream clock node unchanged.

8. The time synchronization packet processing apparatus according to claim 7, wherein the first determination module (401) comprises:
a first determination unit arranged to, when the change condition of the time source information is that the time source information cannot be normally received, determine that a time synchronization packet parameter transmitted to the downstream clock node is required to be modified; or
a second determination unit arranged to, when the change condition of the time source information leads to that the time synchronization node changes a time source according to the received time source information, determine that a time synchronization packet parameter transmitted to the downstream clock node is required to be modified.

9. The time synchronization packet processing apparatus according to claim 8, further comprising:
a second determination module arranged to, when the change condition of the time source information is that the time source information cannot be normally received, determine after the predetermined time expires whether the time synchronization node is in a time synchronization holdover state; and
a second processing module arranged to, when the time synchronization node is in the time synchronization holdover state, modify, according to a parameter of a time source currently tracked by the time synchronization node, the time synchronization packet parameter transmitted to the downstream clock node.

10. The time synchronization packet processing apparatus according to claim 8, further comprising:
a third processing module arranged to, when the change condition of the time source information leads to that the time synchronization node changes a time source according to the received time source information, modify after the predetermined time expires, a time synchronization packet parameter transmitted via a slave clock according to a parameter of a time source currently tracked by the time synchronization node.

11. The time synchronization packet processing apparatus according to any one of claims 7 to 10, further comprising:
a fourth processing module arranged to, when no time source switching is needed for the time synchronization node based on the change condition of the time source information, modify, according to the change condition of the time source information, the time synchronization packet parameter transmitted to the downstream clock node.

12. The time synchronization packet processing apparatus according to any one of claims 7 to 11, wherein when change conditions of the received time source information are different, corresponding predetermined time delays are different.

## Patentansprüche

1. Zeitsynchronisationspaket-Verarbeitungsverfahren, das auf einen Zeitsynchronisationsknoten angewendet wird, wobei das Verfahren umfasst:
Bestimmen (S11), gemäß einer Änderungsbedingung von empfangenen Zeitquelleninformationen, ob sich eine vom Zeitsynchronisationsknoten verfolgte Zeitquelle ändert, wobei die Zeitquelleninformationen umfassen: mindestens eines aus einem Parameter eines Empfangssatelliten oder einem Parameter eines Satellitenempfängers; oder ein Zeitsynchronisationspaket; und
wenn sich die vom Zeitsynchronisationsknoten verfolgte Zeitquelle ändert und nach einer vorbestimmten Zeitverzögerung, Senden (S12) eines Zeitsynchronisationspaketparameters, der gemäß der Änderungsbedingung der Zeitquelleninformationen modifiziert wurde, an einen stromabwärtigen Taktknoten, wobei der Zeitsynchronisationsknoten innerhalb der vorbestimmten Zeit einen Zeitsynchronisationspaketparameter, der an den stromabwärtigen Taktknoten übertragen wird, unverändert beibehält.

2. Zeitsynchronisationspaket-Verarbeitungsverfahren nach Anspruch 1, wobei, wenn die Änderungsbedingung der Zeitquelleninformationen lautet, dass die Zeitquelleninformationen nicht normal empfangen werden können, oder wenn die Änderungsbedingung der Zeitquelleninformationen dazu führt, dass der Zeitsynchronisationsknoten eine Zeitquelle gemäß den empfangenen Zeitquelleninformationen ändert, ein Zeitsynchronisationspaketparameter, der an den stromabwärtigen Taktknoten übertragen wird, modifiziert werden muss.

3. Zeitsynchronisationspaket-Verarbeitungsverfahren nach Anspruch 2, wobei, wenn die Änderungsbedingung der Zeitquelleninformationen lautet, dass die Zeitquelleninformationen nicht normal empfangen werden können, das Verarbeitungsverfahren weiter umfasst:
nachdem die vorbestimmte Zeit abläuft, Bestimmen (S23), ob sich der Zeitsynchronisationsknoten in einem Zeitsynchronisations-Haltezustand befindet; und
wenn sich der Zeitsynchronisationsknoten in dem Zeitsynchronisations-Haltezustand befindet, Modifizieren (S24) des Zeitsynchronisationspaketparameters, der an den stromabwärtigen Taktknoten übertragen wird, gemäß einem Parameter einer aktuell vom Zeitsynchronisationsknoten verfolgten Zeitquelle.

4. Zeitsynchronisationspaket-Verarbeitungsverfahren nach Anspruch 2, wobei, wenn die Änderungsbedingung der Zeitquelleninformationen dazu führt, dass der Zeitsynchronisationsknoten eine Zeitquelle gemäß den empfangenen Zeitquelleninformationen ändert, das Verarbeitungsverfahren weiter umfasst:
nachdem die vorbestimmte Zeit abläuft, Modifizieren (S33) eines Zeitsynchronisationspaketparameters, der über einen Slave-Takt übertragen wird, gemäß einem Parameter einer aktuell vom Zeitsynchronisationsknoten verfolgten Zeitquelle.

5. Zeitsynchronisationspaket-Verarbeitungsverfahren nach einem der Ansprüche 1 bis 4, weiter umfassend:
wenn auf Basis der Änderungsbedingung der Zeitquelleninformationen keine Zeitquellenumschaltung für den Zeitsynchronisationsknoten erforderlich ist, Modifizieren des an den stromabwärtigen Taktknoten übertragenen Zeitsynchronisationspaketparameters gemäß der Änderungsbedingung der Zeitquelleninformationen.

6. Zeitsynchronisationspaket-Verarbeitungsverfahren nach einem der Ansprüche 1 bis 5, wobei sich entsprechende vorbestimmte Zeitverzögerungen unterscheiden, wenn sich Änderungsbedingungen der empfangenen Zeitquelleninformationen unterscheiden.

7. Zeitsynchronisationspaket-Verarbeitungsvorrichtung, die auf einen Zeitsynchronisationsknoten angewendet wird, wobei die Vorrichtung umfasst:
ein erstes Bestimmungsmodul (401), das dazu eingerichtet ist, gemäß einer Änderungsbedingung von empfangenen Zeitquelleninformationen zu bestimmen, ob sich eine vom Zeitsynchronisationsknoten verfolgte Zeitquelle ändert, wobei die Zeitquelleninformationen umfassen: mindestens eines aus einem Parameter eines Empfangssatelliten oder einem Parameter eines Satellitenempfängers; oder ein Zeitsynchronisationspaket; und
ein erstes Verarbeitungsmodul (402), das dazu eingerichtet ist, wenn sich die vom Zeitsynchronisationsknoten verfolgte Zeitquelle ändert und nach einer vorbestimmten Zeitverzögerung einen Zeitsynchronisationspaketparameter, der gemäß der Änderungsbedingung der Zeitquelleninformationen modifiziert wurde, an einen stromabwärtigen Taktknoten zu senden,
wobei der Zeitsynchronisationsknoten dazu eingerichtet ist, innerhalb der vorbestimmten Zeit einen Zeitsynchronisationspaketparameter, der an den stromabwärtigen Taktknoten übertragen wird, unverändert beizubehalten.

8. Zeitsynchronisationspaket-Verarbeitungsvorrichtung nach Anspruch 7, wobei das erste Bestimmungsmodul (401) umfasst:
eine erste Bestimmungseinheit, die dazu eingerichtet ist, wenn die Änderungsbedingung der Zeitquelleninformationen lautet, dass die Zeitquelleninformationen nicht normal empfangen werden können, zu bestimmen, dass ein Zeitsynchronisationspaketparameter, der an den stromabwärtigen Taktknoten übertragen wird, modifiziert werden muss; oder
eine zweite Bestimmungseinheit, die dazu eingerichtet ist, wenn die Änderungsbedingung der Zeitquelleninformationen dazu führt, dass der Zeitsynchronisationsknoten eine Zeitquelle gemäß den empfangenen Zeitquelleninformationen ändert, zu bestimmen, dass ein Zeitsynchronisationspaketparameter, der an den stromabwärtigen Taktknoten übertragen wird, modifiziert werden muss.

9. Zeitsynchronisationspaket-Verarbeitungsvorrichtung nach Anspruch 8, weiter umfassend:
ein zweites Bestimmungsmodul, das dazu eingerichtet ist, wenn die Änderungsbedingung der Zeitquelleninformationen lautet, dass die Zeitquelleninformationen nicht normal empfangen werden können, nachdem die vorbestimmte Zeit abläuft zu bestimmen, ob sich der Zeitsynchronisationsknoten in einem Zeitsynchronisations-Haltezustand befindet; und
ein zweites Verarbeitungsmodul, das dazu eingerichtet ist, wenn sich der Zeitsynchronisationsknoten in dem Zeitsynchronisations-Haltezustand befindet, den Zeitsynchronisationspaketparameter, der an den stromabwärtigen Taktknoten übertragen wird, gemäß einem Parameter einer aktuell vom Zeitsynchronisationsknoten verfolgten Zeitquelle zu modifizieren.

10. Zeitsynchronisationspaket-Verarbeitungsvorrichtung nach Anspruch 8, weiter umfassend:
ein drittes Verarbeitungsmodul, das dazu eingerichtet ist, wenn die Änderungsbedingung der Zeitquelleninformationen dazu führt, dass der Zeitsynchronisationsknoten eine Zeitquelle gemäß den empfangenen Zeitquelleninformationen ändert, nachdem die vorbestimmte Zeit abläuft einen Zeitsynchronisationspaketparameter, der über einen Slave-Takt übertragen wird, gemäß einem Parameter einer aktuell vom Zeitsynchronisationsknoten verfolgten Zeitquelle zu modifizieren.

11. Zeitsynchronisationspaket-Verarbeitungsvorrichtung nach einem der Ansprüche 7 bis 10, weiter umfassend:
ein viertes Verarbeitungsmodul, das dazu eingerichtet ist, wenn auf Basis der Änderungsbedingung der Zeitquelleninformationen keine Zeitquellenumschaltung für den Zeitsynchronisationsknoten erforderlich ist, den an den stromabwärtigen Taktknoten übertragenen Zeitsynchronisationspaketparameter gemäß der Änderungsbedingung der Zeitquelleninformationen zu modifizieren.

12. Zeitsynchronisationspaket-Verarbeitungsvorrichtung nach einem der Ansprüche 7 bis 11, wobei sich entsprechende vorbestimmte Zeitverzögerungen unterscheiden, wenn sich Änderungsbedingungen der empfangenen Zeitquelleninformationen unterscheiden.

## Revendications

1. Procédé de traitement de paquets de synchronisation temporelle, appliqué à un nœud de synchronisation temporelle, le procédé comprenant :
la détermination (S11), en fonction d'une condition de changement d'informations de source de temps reçues, si une source de temps suivie par le nœud de synchronisation temporelle change, dans lequel les informations de source de temps comprennent : au moins un parmi un paramètre d'un satellite de réception ou un paramètre d'un récepteur satellite ; ou un paquet de synchronisation temporelle ; et
quand la source de temps suivie par le nœud de synchronisation temporelle change et après un temps de retard prédéterminé, l'envoi (S12), à un nœud d'horloge en aval, d'un paramètre de paquet de synchronisation temporelle modifié en fonction de la condition de changement des informations de source de temps, dans lequel, dans le temps prédéterminé, le nœud de synchronisation temporelle maintient un paramètre de paquet de synchronisation temporelle transmis au nœud d'horloge en aval inchangé.

2. Procédé de traitement de paquets de synchronisation temporelle selon la revendication 1, dans lequel, quand la condition de changement des informations de source de temps est que les informations de source de temps ne peuvent pas être reçues normalement, ou quand la condition de changement des informations de source de temps conduit à ce que le nœud de synchronisation temporelle change une source de temps en fonction des informations de source de temps reçues, un paramètre de paquet de synchronisation temporelle transmis au nœud d'horloge en aval doit être modifié.

3. Procédé de traitement de paquets de synchronisation temporelle selon la revendication 2, dans lequel, quand la condition de changement des informations de source de temps est que les informations de source de temps ne peuvent pas être reçues normalement, le procédé de traitement comprend en outre :
après que le temps prédéterminé expire, la détermination (S23) si le nœud de synchronisation temporelle est dans un état de rémanence de synchronisation temporelle ; et
quand le nœud de synchronisation temporelle est dans l'état de rémanence de synchronisation temporelle, la modification (S24), en fonction d'un paramètre d'une source de temps actuellement suivie par le nœud de synchronisation temporelle, du paramètre de paquet de synchronisation temporelle transmis au nœud d'horloge en aval.

4. Procédé de traitement de paquets de synchronisation temporelle selon la revendication 2, dans lequel, quand la condition de changement des informations de source de temps conduit à ce que le nœud de synchronisation temporelle change une source de temps en fonction des informations de source de temps reçues, le procédé de traitement comprend en outre :
après que le temps prédéterminé expire, la modification (S33), en fonction d'un paramètre d'une source de temps actuellement suivie par le nœud de synchronisation temporelle, d'un paramètre de paquet de synchronisation temporelle transmis via une horloge esclave.

5. Procédé de traitement de paquets de synchronisation temporelle selon l'une quelconque des revendications 1 à 4, comprenant en outre :
quand aucune commutation de source de temps n'est nécessaire pour le nœud de synchronisation temporelle sur la base de la condition de changement des informations de source de temps, la modification, en fonction de la condition de changement des informations de source de temps, du paramètre de paquet de synchronisation temporelle transmis au nœud d'horloge en aval.

6. Procédé de traitement de paquets de synchronisation temporelle selon l'une quelconque des revendications 1 à 5, dans lequel, quand des conditions de changement des informations de source de temps reçues sont différentes, des retards de temps prédéterminé correspondants sont différents.

7. Dispositif de traitement de paquets de synchronisation temporelle, appliqué à un nœud de synchronisation temporelle, le dispositif comprenant :
un premier module de détermination (401) agencé pour déterminer, en fonction d'une condition de changement d'informations de source de temps reçues, si une source de temps suivie par le nœud de synchronisation temporelle change, dans lequel les informations de source de temps comprennent : au moins un parmi un paramètre d'un satellite de réception ou un paramètre d'un récepteur satellite ; ou un paquet de synchronisation temporelle ; et
un premier module de traitement (402) agencé pour, quand la source de temps suivie par le nœud de synchronisation temporelle change et après un temps de retard prédéterminé, envoyer, à un nœud d'horloge en aval, un paramètre de paquet de synchronisation temporelle modifié en fonction de la condition de changement des informations de source de temps,
dans lequel, dans le temps prédéterminé, le nœud de synchronisation temporelle est agencé pour maintenir un paramètre de paquet de synchronisation temporelle transmis au nœud d'horloge en aval inchangé.

8. Dispositif de traitement de paquets de synchronisation temporelle selon la revendication 7, dans lequel le premier module de détermination (401) comprend :
une première unité de détermination agencée pour, quand la condition de changement des informations de source de temps est que les informations de source de temps ne peuvent pas être reçues normalement, déterminer qu'un paramètre de paquet de synchronisation temporelle transmis au nœud d'horloge en aval doit être modifié ; ou
une seconde unité de détermination agencée pour, quand la condition de changement des informations de source de temps conduit à ce que le nœud de synchronisation temporelle change une source de temps en fonction des informations de source de temps reçues, déterminer qu'un paramètre de paquet de synchronisation temporelle transmis au nœud d'horloge en aval doit être modifié.

9. Dispositif de traitement de paquets de synchronisation temporelle selon la revendication 8, comprenant en outre :
un second module de détermination agencé pour, quand la condition de changement des informations de source de temps est que les informations de source de temps ne peuvent pas être reçues normalement, déterminer après que le temps prédéterminé expire si le nœud de synchronisation temporelle est dans un état de rémanence de synchronisation temporelle ; et
un deuxième module de traitement agencé pour, quand le nœud de synchronisation temporelle est dans l'état de rémanence de synchronisation temporelle, modifier, en fonction d'un paramètre d'une source de temps actuellement suivie par le nœud de synchronisation temporelle, le paramètre de paquet de synchronisation temporelle transmis au nœud d'horloge en aval.

10. Dispositif de traitement de paquets de synchronisation temporelle selon la revendication 8, comprenant en outre :
un troisième module de traitement agencé pour, quand la condition de changement des informations de source de temps conduit à ce que le nœud de synchronisation temporelle change une source de temps en fonction des informations de source de temps reçues, modifier après que le temps prédéterminé expire un paramètre de paquet de synchronisation temporelle transmis via une horloge esclave en fonction d'un paramètre d'une source de temps actuellement suivie par le nœud de synchronisation temporelle.

11. Dispositif de traitement de paquets de synchronisation temporelle selon l'une quelconque des revendications 7 à 10, comprenant en outre :
un quatrième module de traitement agencé pour, quand aucune commutation de source de temps n'est nécessaire pour le nœud de synchronisation temporelle sur la base de la condition de changement des informations de source de temps, modifier, en fonction de la condition de changement des informations de source de temps, le paramètre de paquet de synchronisation temporelle transmis au nœud d'horloge en aval.

12. Dispositif de traitement de paquets de synchronisation temporelle selon l'une quelconque des revendications 7 à 11, dans lequel, quand des conditions de changement des informations de source de temps reçues sont différentes, des retards de temps prédéterminé correspondants sont différents.
